# EUROPÄISCHE PATENTSCHRIFT

(11) **EP 2 720 945 B1**
(45) Veröffentlichungstag und Bekanntmachung des Hinweises auf die Patenterteilung: **13.04.2016**
(21) Anmeldenummer: 12740465.5
(22) Anmeldetag: 25.05.2012
(51) Int. Cl.: B64D 27/24

(54) **ELEKTRISCHE ANTRIEBSVORRICHTUNG FÜR EIN LUFTFAHRZEUG**
ELECTRIC PROPULSION SYSTEM FOR AIRCRAFT
PROPULSEUR ÉLECTRIQUE POUR AVION

(30) Priorität: 14.06.2011 DE 102011105880
(43) Veröffentlichungstag der Anmeldung: 23.04.2014
(73) Patentinhaber: Airbus Defence and Space GmbH, 85521 Ottobrunn (DE)
(72) Erfinder: STÜCKL, Stefan, 80798 München (DE); VAN TOOR, Jan, 81739 München (DE)
(74) Vertreter: Rasch, Michael
(86) Internationale Anmeldenummer: PCT/DE2012/000544
(87) Internationale Veröffentlichungsnummer: WO 2012/171520

(56) Entgegenhaltungen:
- WO-A2-2011/023396
- CN-Y- 201 009 757
- DE-A1-102007 017 332
- US-A1- 2006 254 255

## Beschreibung

Die Erfindung betrifft eine elektrische Antriebsvorrichtung für ein Luftfahrzeug, die mindestens eine Batterie zur Speicherung elektrischer Energie, einen Elektromotor zum Antrieb eines Propellers, ein Leitungsmittel zum Übertagen der elektrischen Energie von der Batterie an den Elektromotor, und ein erstes Steuermittel zur Steuerung des Elektromotors umfasst. Die Erfindung findet Anwendung in der Luftfahrzeugindustrie.

Gattungsgemäße Antriebsvorrichtungen für sogenannte "Elektroflugzeuge" sind im Stand der Technik bekannt. Erste solche Anwendungen von Elektronantrieben finden sich im Flugzeug-Modellbau. Ein zentraler Punkt bei Elektroantrieben für Luftfahrzeuge ist die Speicherung und/oder Erzeugung von elektrischer Antriebsenergie an Bord des Luftfahrzeugs. Durch entsprechende Weiterentwicklungen der Batterietechnologie bis heute, insbesondere durch Erhöhung der spezifischen Energiedichte [Wh/kg] von Batterien, ist in letzter Zeit der Elektroantrieb auch für Flugzeuge realisiert worden, die sich bspw. zum Personentransport eignen. Neben der Energieversorgung des Elektroantriebes durch Batterien werden typischerweise zusätzliche Technologien zur Erzeugung von elektrischer Energie an Bord des Luftfahrzeugs eingesetzt. So ist der Einsatz von Brennstoffzellen zur On-Bord Energieerzeugung bspw. von dem deutschen Erprobungsträger Antares 20E, einem einsitzigen Motorsegler mit einem von einem Elektromotor angetriebenen Propeller bekannt. Darüber hinaus ist es mit einem Solarflugzeug des Schweizer Projekts SOLAR IMPULSE kürzlich gelungen, das von einem Piloten gesteuerte Solarflugzeug mit einer Spannweite von ca. 64 Meter Spannweite und einem Gewicht von ca. 1,6 t durch eine ganze Nacht hindurch zu betreiben. Die tagsüber aufgenommene, in elektrische Energie umgewandelte und in Batterien gespeicherte Sonnenenergie ermöglichte diesen Flug mit einer Flugzeit von ca. 26 Stunden.

Zum Stand der Technik wird auf folgende Dokumente verwiesen: CN 201 009 757 Y, WO 2011/023396 A2, DE 10 2007 017332 A1, und US 2006/254255 A1.

Aufgabe der Erfindung ist es, eine verbesserte elektrische Antriebsvorrichtung anzugeben, die zum Antrieb größerer Luftfahrzeuge zum Personen- oder Frachttransport geeignet ist.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Die Aufgabe ist mit einer Antriebsvorrichtung für ein Luftfahrzeug gelöst, die mindestens eine Batterie zur Speicherung elektrischer Energie, einen Elektromotor zum Antrieb eines Propellers, ein Leitungsmittel zum Übertagen der elektrischen Energie von der Batterie an den Elektromotor, und ein erstes Steuermittel zur Steuerung des Elektromotors umfasst. Die erfindungsgemäße Antriebsvorrichtung zeichnet sich darüber hinaus dadurch aus, dass die Batterie eine Lithium-Luft-Batterie ist; der Elektromotor ein Hochtemperatur-Supraleiter-Motor ist; zumindest ein Speicher für ein Kühlmittel und ein mit dem Speicher verbundenes Kühlsystem zur Kühlung des Hochtemperatur-Supraleiter-Motors vorhanden ist, wobei das Kühlsystem ein zweites Steuermittel zur Steuerung des Kühlsystems umfasst; ein erstes Mittel zur variablen Anordnung der Lithium-Luft-Batterie und/oder ein zweites Mittel zur variablen Anordnung des Speichers im Luftfahrzeug vorhanden ist/sind; und ein drittes Steuermittel zur Steuerung des ersten und/oder des zweiten Mittels vorhanden ist, wobei die Steuerung des ersten und/oder des zweiten Mittels derart erfolgt, dass die Lithium-Luft-Batterie und/oder der Speicher im Luftfahrzeug derart angeordnet werden, dass eine sich während eines Betriebes der Antriebsvorrichtung ergebende Massenzunahme der Lithium-Luft-Batterie und eine sich während eines Betriebes der Antriebsvorrichtung ergebende Massenabnahme des Kühlmittels (bspw. flüssiger Stickstoff) im Speicher eine Schwerpunktlage des Luftfahrzeugs nicht ändert.

Die Lithium-Luft Batterie und deren Wirkprinzip sind im Stand der Technik bekannt. Die Lithium-Luft-Batterie zeichnet sich durch eine besonders große Energiedichte von theoretisch bis über 5.000 Wh/kg bei einer Leerlaufspannung von 2.91 V aus. Bei der Entladung der Lithium-Luft-Batterie, d.h. bei einer Entnahme elektrischer Energie, wird das Lithium Li der Anode zu Lithium-Oxid Li₂O oder Lithium-Peroxid Li₂O₂ oxidiert. Dies führt zu einer Massen- bzw. Gewichtszunahme der Batterie, die bei entsprechend großen Batterien, wie sie vorliegend benötigt werden, einige 100 kg ausmachen kann. Diese Gewichtsänderung führt zu einer Verschiebung des Schwerpunkts des Luftfahrzeugs während des Betriebs.

Die Antriebsvorrichtung umfasst erfindungsgemäß einen Speicher mit Kühlmittel, mit dem zumindest der Hochtemperatur-Supraleiter-Motor, und bevorzugt auch das Leitungsmittel soweit gekühlt werden können, dass Supraleitung auftritt. Derartige Motoren erlauben eine weitere Verringerung von Energieverlusten bei der Umsetzung von elektrischer Energie aus der Lithium-Luft-Batterie in mechanische Energie.
Das Kühlmittel im Speicher ist bevorzugt flüssiger Stickstoff. Mögliche Alternativen sind flüssiger Wasserstoff oder flüssiges Helium. Das Leitungsmittel ist bevorzugt ein Kupferoxid-basierter Hochtemperatursupraleiter. Zur Kühlung des Hochtemperatur-Supraleiter-Motors bzw. des Leitungsmittels wird das Kühlmittel in thermisch leitenden Kontakt mit dem Hochtemperatur-Supraleiter-Motor bzw. dem Leitungsmittel gebracht. Durch den Betrieb des Kühlsystems wird das Kühlmittel, vorliegend letztlich in die freie Atmosphäre abgegeben, so dass der Kühlmittelstand im Speicher im Laufe des Betriebs abnimmt. Die Abgabe von Stickstoff an die Atmosphäre ist aus Umweltschutzgründen unbedenklich. Der Verlust an Kühlmittel im Speicher führt zu einem Massen- bzw. Gewichtsverlust des im Speicher enthaltenen Kühlmittels.

Um einerseits die Massen- bzw. Gewichtszunahme der Lithium-Luft-Batterie und andererseits die Massen- bzw. Gewichtsabnahme des Kühlmittels im Speicher in Bezug auf die dadurch im Betrieb erzeugten Verschiebungen des Massenschwerpunkts des Luftfahrzeugs bzw. die dadurch auftretenden Momente auszugleichen, ist/sind die Lithium-Luft-Batterie und/oder der Speicher mit dem Kühlmittel im Luftfahrzeug variabel anordenbar. Bevorzugt sind die Lithium-Luft-Batterie und/oder der Speicher dabei im Rumpf des Luftfahrzeugs angeordnet. Weiterhin bevorzugt, ist die Lithium-Luft-Batterie in einem Gehäuse angeordnet, das Außenmaße eines Standard Luftfracht Containers, insbesondere LD3, LD6, aufweist. So können vorhandene Standard-Frachträume zur Unterbringung der Lithium-Luft-Batterie genutzt werden. Es sei an dieser Stelle noch angemerkt, dass vorliegend der Begriff "Lithium-Luft-Batterie" insbesondere auch eine Zusammenschaltung mehrerer Lithium-Luft-Batterien umfasst.

Zur variablen Anordnung der Lithium-Luft-Batterie, d.h. insbesondere zu deren Verschiebung entlang einer Längsachse des Luftfahrzeugs, ist das erste Mittel vorhanden. Es umfasst einen Antrieb (bspw. einen Linearantrieb) und eine entsprechende Mechanik. Zur variablen Anordnung des Kühlmittel-Speichers, d.h. insbesondere zu dessen Verschiebung entlang der Längsachse des Luftfahrzeugs, ist analoger Weise das zweite Mittel vorhanden. Erfindungsgemäß wird die Anordnung der Lithium-Luft-Batterie und/oder des Speichers von dem dritten Steuermittel derart gesteuert, dass sich eine Schwerpunktlage des Luftfahrzeugs nicht ändert. In einer bevorzugten Ausführungsform ist dabei lediglich die Lithium-Luft-Batterie variabel im Luftfahrzeug anordenbar.

Eine bevorzugte Weiterbildung der erfindungsgemäßen Antriebsvorrichtung zeichnet sich dadurch aus, dass die Lithium-Luft-Batterie ein druckdichtes Gehäuse aufweist, welches über eine separate, insbesondere eine von einer Luftversorgung einer Passagierkabine des Luftfahrzeugs unabhängige Luftversorgung mit Außenluft versorgt wird. Diese unabhängige Luftversorgung kann eine flughöhenabhängige Bedruckung des druckdichten Batteriegehäuses ermöglichen. Durch die Separierung der Luftversorgung kann die Luftversorgung optimal auf die Bedürfnisse der Lithium-Luft-Batterie abgestimmt werden.

Eine weitere bevorzugte Weiterbildung der erfindungsgemäßen Antriebsvorrichtung zeichnet sich dadurch aus, dass zusätzlich zum Hochtemperatur-Supraleiter-Motor auch das Leitungsmittel supraleitend ist, und dass das Kühlsystem zur Kühlung des Leitungsmittels ausgelegt und eingerichtet ist. Durch das supraleitende Leitungsmittel kann die elektrische Energie nahezu verlustfrei von der Lithium-Luft-Batterie zum Hochtemperatur-Supraleiter-Elektromotor übertragen werden.

In einer weiteren bevorzugten Weiterbildung ist das Kühlsystem derart ausgeführt und eingerichtet, dass das Kühlmittel vom Speicher im Normalbetrieb den nachfolgend genannten Komponenten in folgender Reihenfolge zugeführt wird, zunächst dem Leitungsmittel, anschließend dem Elektromotor und anschließend weiteren Systemen des Luftfahrzeugs, insbesondere dem ersten Steuermittel, dem zweiten Steuermittel, dem dritten Steuermittel und/oder Avioniksystemen, bevor das Kühlmittel über einen Auslass in eine Umgebung ausströmt. Dadurch wird das Kühlmittel in optimaler weise zur Kühlung von Systemkomponenten des Luftfahrzeugs genutzt, bevor es an die umgebende Atmosphäre abgegeben wird.

Eine weitere bevorzugte Weiterbildung der erfindungsgemäßem Antriebsvorrichtung zeichnet sich dadurch aus, dass das zweite Steuermittel und das Kühlsystem derart ausgelegt und eingerichtet sind, dass abhängig von einer von der erfindungsgemäßen Antriebsvorrichtung abgerufenen Antriebsleistung eine Rangfolge ermittelbar ist, mit der eine Kühlung der einzelnen Komponenten erfolgen soll, und das Kühlmittel den einzelnen Komponenten entsprechend der Rangfolge zugeleitet wird. In dieser Konfiguration kann bspw. während der Startphase, in der eine maximale Antriebsleitung von der Antriebsvorrichtung abgerufen wird, die Kühlung vorwiegend des Hochtemperatur-Supraleiter-Motors und mit zweiter Priorität des Leitungsmittel erfolgen, während die Kühlung der weiteren Systemkomponenten nur in reduzierter Form und nicht erfolgt.

Eine besonders bevorzugte Weiterbildung der erfindungsgemäßen Antriebsvorrichtung zeichnet sich dadurch aus, dass zur Ladung der Batterie und/oder zur Bereitstellung weiterer elektrischer Energie Solarzellen, zumindest eine Brennstoffzelle und/oder ein Verbrennungsmotor mit Stromgenerator vorhanden ist/sind.

Die Antriebsvorrichtung kann insbesondere zwei Elektromotoren aufweisen, die jeweils einen Propeller antreiben, deren Propellerachsen konzentrisch gelagert sind.

Die Erfindung umfasst weiterhin ein Flugzeug mit einer vorbeschriebenen Antriebsvorrichtung.

Weitere Vorteile, Merkmale und Einzelheiten ergeben sich aus der nachfolgenden Beschreibung, in der unter Bezug auf die Zeichnung Ausführungsbeispiele im Einzelnen beschrieben sind. Gleiche, ähnliche und/oder funktionsgleiche Teile sind mit gleichen Bezugszeichen versehen.

Es zeigen:
- Fig. 1: eine schematische Darstellung einer in ein Luftfahrzeug integrierten erfindungsgemäßen Antriebsvorrichtung,
- Fig. 2: eine schematische Darstellung zur Erläuterung des Zusammenwirkens von Komponenten der erfindungsgemäßen Antriebsvorrichtung, und
- Fig. 3: eine schematische Darstellung der Kühlung eines supraleitenden Elektromotors und einer nicht supraleitenden Steuerungselektronik.

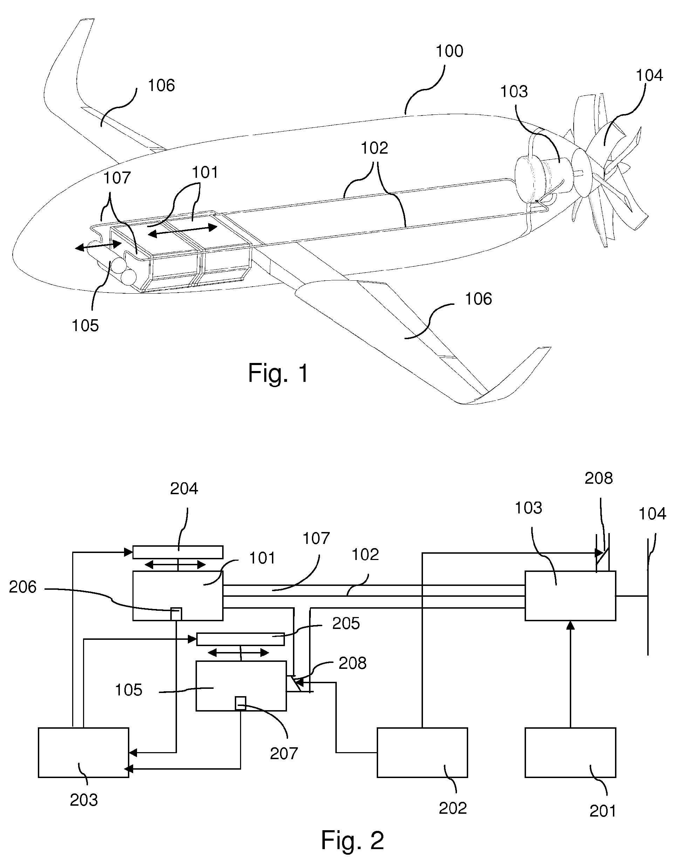

**Fig. 1** zeigt eine schematische Darstellung einer in ein Luftfahrzeug 100 mit konventionellen Auftriebsflächen 106 (Flügeln) integrierten erfindungsgemäßen Antriebsvorrichtung. Das Luftfahrzeug 100 sei zum Transport einer Nutzlast von 6.600 kg (ca. 70 Passagiere) über eine Entfernung von 500 nautischen Meilen [NM] bei einer Fluggeschwindigkeit von 500 km/h ausgelegt. Für das Luftfahrzeug 100 gelte ein Gleitverhältnis (engl. "lift-to-drag-ratio") von 24. Für diese Flugmission ist eine Energie von 14.700 MJ (= 4.100 kWh) erforderlich. Zum Start des Luftfahrzeugs 100 werden kurzfristig ca. 4.000 kW benötigt. Um eine solche Flugmission mit einer erfindungsgemäßen Antriebsvorrichtung durchzuführen, ist eine Lithium-Luft-Batterie 101 mit einer Masse von 4.570 kg bei einem Batterievolumen von ca. 6,8 m³ vorgesehen. Die Lithium-Luft-Batterie 101 weist dabei eine Energiedichte von 1.000 Wh/kg auf. Die Lithium-Luft-Batterie 101 besteht vorliegend aus zwei zusammengeschaltete Lithium-Luft-Batterien 101, die jeweils in einem Standard Luftfracht-Container LD3 untergebracht sind. Die Container sind entlang der Längsachse des Luftfahrzeugs 100 verschiebbar (angedeutet durch den Pfeil über den Batterien 101) angeordnet. Das Luftfahrzeug 100 umfasst weiterhin einen Elektromotor 103 zum Antrieb eines Doppelpropellers 104 am Heck des Luftfahrzeugs 100, sowie ein supraleitfähiges Leitungsmittel 102 zur Übertragung elektrischer Energie von den Lithium-Luft-Batterien 101 zum Elektromotor 103. Das Leitungsmittel 102 ist umgeben von Kühlmittelleitungen 107, die das Leitungsmittel zur Aufrechterhaltung der Supraleitung kühlen. Das Kühlmittel ist in einem ebenfalls entlang der Längsachse des Luftfahrzeugs verschiebbar angeordneten Speicher 105 bevorratet. Der Elektromotor 103 ist vorliegend als Hochtemperatur-Supraleiter-Motor ausgestaltet und wird ebenfalls durch das Kühlmittel gekühlt.

**Fig. 2** zeigt eine schematische Darstellung zur Erläuterung des Zusammenwirkens von Komponenten der erfindungsgemäßen Antriebsvorrichtung für das in Fig. 1 gezeigte Luftfahrzeug 100. Die Antriebsvorrichtung umfasst eine Batterie 101 zur Speicherung elektrischer Energie, einen Hochtemperatur-Supraleiter-Motor 103 zum Antrieb eines Propellers 104, ein Leitungsmittel 102 zum Übertagen der elektrischen Energie von der Batterie 101 an den Hochtemperatur-Supraleiter-Motor 103, und ein erstes Steuermittel 201 zur Steuerung des Elektromotors 103. Die Antriebsvorrichtung zeichnet sich weiterhin dadurch aus, dass die Batterie 101 eine Lithium-Luft-Batterie ist; das Leitungsmittel 102 supraleitend ist; zumindest ein Speicher 105 für ein Kühlmittel und ein mit dem Speicher 105 verbundenes Kühlsystem zur Kühlung des Hochtemperatur-Supraleiter-Motors 103 und des Leitungsmittels 102 vorhanden ist, wobei das Kühlsystem ein zweites Steuermittel 202 zur Steuerung des Kühlsystems umfasst; ein erstes Mittel 204 zur variablen Anordnung der Lithium-Luft-Batterie 101 und ein zweites Mittel 205 zur variablen Anordnung des Speichers 105 im Luftfahrzeug 100 vorhanden sind; und ein drittes Steuermittel 203 zur Steuerung des ersten 204 und/oder des zweiten 205 Mittels vorhanden ist, wobei die Steuerung des ersten 204 und des zweiten 205 Mittels derart erfolgt, dass die Lithium-Luft-Batterie 101 und der Speicher 105 im Luftfahrzeug 100 entlang der Längsachse des Luftfahrzeugs derart angeordnet werden, dass eine sich während eines Betriebes der Antriebsvorrichtung ergebende Massenzunahme der Lithium-Luft-Batterie 101 und eine sich während eines Betriebes der Antriebsvorrichtung ergebende Massenabnahme des flüssigen Stickstoffs im Speicher 105 eine Schwerpunktlage des Luftfahrzeugs 100 nicht ändert. Das Kühlsystem weist ein Rohrsystem auf, das vom Kühlmittel durchströmt wird. Das Rohrsystem führt das Kühlmittel vom Speicher 105 zunächst zum Leitungsmittel 102. Dort strömt es zur Kühlung durch das Leitungsmittel umgebende Kühlleitungen 107 zum Hochtemperatur-Supraleiter-Motor 103, wo es zu dessen Kühlung genutzt wird. Nach Durchströmen des Hochtemperatur-Supraleiter-Motors 103 wird es noch zur Kühlung einer Leistungselektronik 305 genutzt, bevor es in die umgebende Atmosphäre entlassen wird. Die Steuerung des Kühlsystems erfolgt durch das zweite Mittel, das vorliegend zumindest zwei Ventile 208 ansteuert.

Das dritte Steuermittel 203 ist vorliegend mit zwei Sensoren 206 und 207 verbunden. Der Sensor 206 dient zur Bestimmung des aktuellen Gewichts der Lithium-Luft-Batterie. Der Sensor 207 dient zur Bestimmung des aktuellen Gewichts des im Speicher enthaltenen Kühlmittels. Beide Informationen werden vom dritten Steuermittel 203 genutzt, um die Lithium-Luft-Batterien 101 und den Speicher 105 im Luftfahrzeug 100 mittels des ersten 204 und des zweiten Mittels 205 entlang der Längsachse des Luftfahrzeugs 100 derart zu verschieben, dass eine sich während eines Betriebes der Antriebsvorrichtung ergebende Massenzunahme der Lithium-Luft-Batterien 101 und eine sich während eines Betriebes der Antriebsvorrichtung ergebende Massenabnahme des flüssigen Stickstoffs im Speicher 105 die Schwerpunktlage des Luftfahrzeugs 100 nicht ändert.

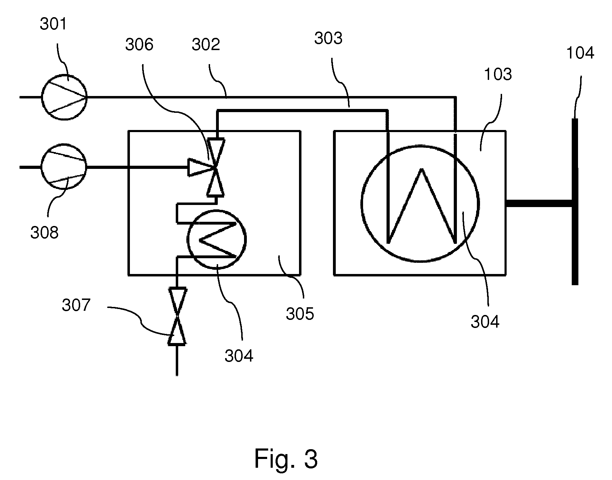

**Fig. 3** zeigt eine schematische Darstellung der Kühlung des Hochtemperatur-Supraleiter-Elektromotors 103 und einer nicht supraleitenden Steuerungselektronik 305. Als Kühlmittel ist im Speicher 105 flüssiger Stickstoff verfügbar, der über die Kühlmittelleitungen 107 und das Ventil 301 nach dem Kühlen des Leitungsmittels 102 dem Hochtemperatur-Supraleiter-Elektromotor 103 zugeführt wird. Der flüssige Stickstoff wird dabei mit ca. 80 Kelvin [K] vom Speicher 105 über eine Förderpumpe (nicht dargestellt) in den Wärmetauscher 304 des Hochtemperatur-Supraleiter-Elektromotors 103 geführt. Dort verdampft je nach Massenstrom ein Teil des Stickstoffs und nimmt dabei durch Verdunstungskälte die Verlustwärme (mechanische Verluste, Isolationsverluste) des Hochtemperatur-Supraleiter-Elektromotors 103 auf. Der gasförmige, immer noch kalte (knapp über 80 K) Stickstoff wird mittels eines Mischventils 306 mit Umgebungsluft vermischt um den Kühlmassenstrom zu erhöhen. Die Umgebungsluft wird mittels eines Verdichters 308 auf den Druck im Kühlmittelsystem gebracht. Das Gemisch aus Umgebungsluft und Stickstoff nimmt in einem weiteren Wärmetauscher 304 die Verlustwärme der Steuerelektronik 305 auf und wird über ein Abgassystem mit dem Ventil 307 an die Umgebung abgegeben. Das Ventil 307 am Austritt des Kühlmittels hält den Druck im Kühlsystem aufrecht. Je nach Kühlungsbedarf und Außentemperatur kann das Verhältnis der Luft-Stickstoffmischung variiert werden. Beispielsweise kann bei Start und Landung bei 30°C Außentemperatur effektiv mit einem hohen Stickstoff-Anteil gekühlt werden. Im Reiseflug in großer Höhe bei geringerer Leistung und Außentemperatur kann der Sticksoff-Anteil auf das notwendige Minimum zur Kühlung des supraleitenden Elektromotors 103 zurückgefahren werden.

### Bezugszeichenliste

- 100: Luftfahrzeug
- 101: Lithium-Luft-Batterien
- 102: supraleitfähiges Leitungsmittel zur Übertragung der elektrischen Energie von der Batterie zum Elektromotor
- 103: Elektromotor, Hochtemperatur-Supraleiter-Motor
- 104: Propeller
- 105: Speicher für Kühlmittel
- 106: Auftriebsflächen (Flügel)
- 107: Kühlleitungen
- 201: erstes Steuermittel
- 202: zweites Steuermittel
- 203: drittes Steuermittel
- 204: erstes Mittel zur variablen Anordnung der Lithium-Luft-Batterie
- 205: zweites Mittel zur variablen Anordnung des Speichers
- 206: Sensor zur Bestimmung des aktuellen Gewichts der Lithium-Luft-Batterie
- 207: Sensor zur Bestimmung des aktuellen Gewichts des im Speicher enthaltenen Kühlmittels
- 208: Ventile
- 301: Ventil
- 302: flüssiges Kühlmittel
- 303: gasförmiges Kühlmittel
- 304: Wärmetauscher
- 305: Steuerungselektronik
- 306: Mischventil
- 307: Auslassventil
- 308: Verdichter

## Patentansprüche

1. Antriebsvorrichtung für ein Luftfahrzeug (100), mindestens umfassend eine Batterie (101) zur Speicherung elektrischer Energie, einen Elektromotor (103) zum Antrieb eines Propellers (104), ein Leitungsmittel (102) zum Übertagen der elektrischen Energie von der Batterie (101) an den Elektromotor (103), und ein erstes Steuermittel (201) zur Steuerung des Elektromotors (103),
**dadurch gekennzeichnet, dass**
- die Batterie (101) eine Lithium-Luft-Batterie ist,
- der Elektromotor (103) ein Hochtemperatur-Supraleiter-Motor ist,
- zumindest ein Speicher (105) für ein Kühlmittel und ein mit dem Speicher (105) verbundenes Kühlsystem zur Kühlung des Hochtemperatur-Supraleiter-Motors (103) vorhanden ist, wobei das Kühlsystem ein zweites Steuermittel (202) zur Steuerung des Kühlsystems umfasst,
- ein erstes Mittel (204) zur variablen Anordnung der Lithium-Luft-Batterie (101) und/oder ein zweites Mittel (205) zur variablen Anordnung des Speichers (105) im Luftfahrzeug (100) vorhanden ist/sind, und
- ein drittes Steuermittel (203) zur Steuerung des ersten (204) und/oder des zweiten (205) Mittels vorhanden ist, wobei die Steuerung des ersten (204) und/oder des zweiten (205) Mittels derart erfolgt, dass die Lithium-Luft-Batterie (101) und/oder der Speicher (105) im Luftfahrzeug (100) derart angeordnet werden, dass eine sich während eines Betriebes der Antriebsvorrichtung ergebende Massenzunahme der Lithium-Luft-Batterie (101) und eine sich während eines Betriebes der Antriebsvorrichtung ergebende Massenabnahme des flüssigen Stickstoffs im Speicher (105) eine Schwerpunktlage des Luftfahrzeugs (100) nicht ändert.

2. Antriebsvorrichtung gemäß Anspruch 1,
**dadurch gekennzeichnet, dass** nur die Lithium-Luft-Batterie (101) variabel anordenbar ist.

3. Antriebsvorrichtung gemäß Anspruch 1 oder 2,
**dadurch gekennzeichnet, dass** die Lithium-Luft-Batterie (101) ein druckdichtes Gehäuse aufweist, welches über eine separate, insbesondere eine von einer Luftversorgung einer Passagierkabine des Luftfahrzeugs (100) unabhängige Luftversorgung mit Außenluft versorgt wird.

4. Antriebsvorrichtung gemäß einem der Ansprüche 1 bis 3,
**dadurch gekennzeichnet, dass** das Leitungsmittel (102) supraleitfähig ist, und dass das Kühlsystem zur Kühlung des Leitungsmittels (102) ausgelegt und eingerichtet ist.

5. Antriebsvorrichtung gemäß einem der Ansprüche 1 bis 4,
**dadurch gekennzeichnet, dass** das Kühlsystem derart ausgeführt und eingerichtet ist, dass das Kühlmittel vom Speicher (105) im Normalbetrieb den nachfolgend genannten Komponenten in folgender Reihenfolge zugeführt wird, zunächst dem Leitungsmittel (102), anschließend dem Elektromotor (103) und anschließend weiteren Systemen des Luftfahrzeugs (100), insbesondere dem ersten Steuermittel (201), dem zweiten Steuermittel (202), dem dritten Steuermittel (203) und/oder Avioniksystemen, bevor das Kühlmittel über einen Auslass in eine Umgebung ausströmt.

6. Antriebsvorrichtung gemäß Anspruch 5,
**dadurch gekennzeichnet, dass** das zweite Steuermittel (202) und das Kühlsystem derart ausgelegt und eingerichtet sind, dass abhängig von einer von der Antriebsvorrichtung abgerufenen Antriebsleistung eine Rangfolge ermittelbar ist, mit der eine Kühlung der einzelnen Komponenten erfolgen soll, und das Kühlmittel den einzelnen Komponenten entsprechend der Rangfolge zugeleitet wird.

7. Antriebsvorrichtung gemäß einem der Ansprüche 1 bis 6 ,
**dadurch gekennzeichnet, dass** das Kühlmittel im Speicher (105) flüssiger Stickstoff ist.

8. Antriebsvorrichtung gemäß einem der Ansprüche 1 bis 7,
**dadurch gekennzeichnet, dass** zwei Elektromotoren (103) vorhanden sind, die jeweils einen Propeller (104) antreiben, deren Propellerachsen konzentrisch gelagert sind.

9. Antriebsvorrichtung gemäß einem der Ansprüche 1 bis 8,
**dadurch gekennzeichnet, dass** die Lithium-Luft-Batterie (101) in einem Gehäuse angeordnet ist, das Außenmaße eines Standard Luftfracht Containers, insbesondere LD3, LD6, aufweist.

10. Flugzeug mit einer Antriebsvorrichtung gemäß einem der Ansprüche 1 bis 9.

## Claims

1. A drive device for an aircraft (100), at least comprising a battery (101) for storing electrical energy, an electric motor (103) for driving a propeller (104), a conductive means (102) for transferring electrical energy from the battery (101) to the electric motor (103), and a first control means (201) for controlling the electric motor (103),
**characterised in that**
- the battery (101) is a lithium-air battery,
- the electric motor (103) is a high temperature superconducting motor,
- at least one reservoir (105) for a coolant and a cooling system connected to the reservoir (105) are present for cooling the high temperature superconducting motor (103), wherein the cooling system comprises a second control means (202) for controlling the cooling system,
- a first means (204) for variable arrangement of the lithium-air battery (101) and/or a second means (205) for variable arrangement of the reservoir (105) in the aircraft (100) is/are present, and
- a third control means (203) for controlling the first means (204) and/or second means (205) is present, wherein the first means (204) and/or the second means (205) is/are controlled in such a manner that the lithium-air battery (101) and/or the reservoir (105) are arranged in the aircraft (100) in such a manner that an increase in the mass of the lithium-air battery (101), which occurs during operation of the drive device, and a decrease in the mass of the liquid nitrogen in the reservoir (105), which occurs during operation of the drive device, do not change the position of the centre of gravity of the aircraft (100).

2. The drive device according to Claim 1,
**characterised in that** only the lithium-air battery (101) can be arranged variably.

3. The drive device according to Claim 1 or 2,
**characterised in that** the lithium-air battery (101) has a pressure-tight housing, which is supplied with external air via a separate air supply, in particular an air supply that is independent of an air supply of a passenger cabin of the aircraft (100).

4. The drive device according to any one of Claims 1 to 3,
**characterised in that** the conductive means (102) is superconductive, and that the cooling system is laid out and designed to cool the conductive means (102).

5. The drive device according to any one of Claims 1 to 4,
**characterised in that** the cooling system is configured and designed in such a manner that during normal operation the coolant is supplied from the reservoir (105) to the components listed below in the following order: first to the conductive means (102), then to the electric motor (103) and then to further systems of the aircraft (100), in particular to the first control means (201), to the second control means (202), to the third control means (203) and/or avionics systems, before the coolant flows out into the environment via an outlet.

6. The drive device according to Claim 5,
**characterised in that** the second control means (202) and the cooling system are laid out and designed in such a manner that an order of priority in which the individual components should be cooled can be determined depending on a drive power demanded by the drive device, and the coolant is supplied to the individual components in accordance with the order of priority.

7. The drive device according to any one of Claims 1 to 6,
**characterised in that** the coolant in the reservoir (105) is liquid nitrogen.

8. The drive device according to any one of Claims 1 to 7,
**characterised in that** two electric motors (103) are present, which each drive a propeller (104), the propeller axles of which are mounted concentrically.

9. The drive device according to any one of Claims 1 to 8,
**characterised in that** the lithium-air battery (101) is arranged in a housing that has the external dimensions of a standard air freight container, in particular LD3, LD6.

10. An aircraft having a drive device according to any one of Claims 1 to 9.

## Revendications

1. Dispositif d'entraînement pour un aéronef (100), comprenant au moins une batterie (101) pour l'accumulation d'énergie électrique, un moteur électrique (103) pour l'entraînement d'une hélice (104), un moyen de conduction (102) pour le transfert de l'énergie électrique de la batterie (101) au moteur électrique (103), et un premier moyen de commande (201) pour la commande du moteur électrique (103),
**caractérisé en ce que**
- la batterie (101) est une batterie au lithium-air,
- le moteur électrique (103) étant un moteur supraconducteur à haute température,
- au moins un réservoir (105) pour un agent réfrigérant et un système de refroidissement relié au réservoir (105) pour le refroidissement du moteur supraconducteur à haute température (103) étant présents, dans lequel le système de refroidissement comprend un deuxième moyen de commande (202) pour la commande du système de refroidissement,
- un premier moyen (204) pour l'agencement variable de la batterie au lithium-air (101) et/ou un deuxième moyen (205) pour l'agencement variable du réservoir (105) dans l'aéronef (100) étant présent(s), et
- un troisième moyen (203) pour la commande du premier (204) et/ou du deuxième moyen (205) étant présent, dans lequel la commande du premier (204) et/ou du deuxième (205) moyen s'effectue de telle sorte que la batterie au lithium-air (101) et/ou le réservoir (105) dans l'aéronef (100) sont disposés de telle sorte qu'une augmentation de masse de la batterie au lithium-air (101) ayant lieu pendant un fonctionnement du dispositif d'entraînement et une diminution de masse de l'azote liquide dans le réservoir (105) ayant lieu pendant un fonctionnement du dispositif d'entraînement ne modifient pas une position de centre de gravité de l'aéronef (100).

2. Dispositif d'entraînement selon la revendication 1,
**caractérisé en ce que** seulement la batterie de lithium-air (101) peut être agencée de manière variable.

3. Dispositif d'entraînement selon la revendication 1 ou 2,
**caractérisé en ce que** la batterie au lithium-air (101) présente un boîtier conservant la pression, lequel est alimenté en air extérieur via une alimentation d'air séparée, en particulier indépendante d'une alimentation d'air d'une cabine de passagers de l'aéronef (100).

4. Dispositif d'entraînement selon l'une des revendications 1 à 3,
**caractérisé en ce que** le moyen de conduction (102) est à capacité supraconductrice et **en ce que** le système de refroidissement est conçu et étudié pour le refroidissement du moyen de conduction (102).

5. Dispositif d'entraînement selon l'une des revendications 1 à 4,
**caractérisé en ce que** le système de refroidissement est réalisé et étudié de telle sorte que l'agent de refroidissement est amené, lors du fonctionnement normal, du réservoir (105) aux composants mentionnés dans ce qui suit, dans l'ordre suivant, à savoir tout d'abord au moyen de conduction (102), ensuite au moteur électrique (103) et ensuite à d'autres systèmes de l'aéronef (100), en particulier au premier moyen de commande (201), au deuxième moyen de commande (202), au troisième moyen de commande (203) et/ou au système d'avionique, avant que l'agent de refroidissement s'échappe dans l'environnement via une sortie.

6. Dispositif d'entraînement selon la revendication 5,
**caractérisé en ce que** le deuxième moyen de commande (202) et le système de refroidissement sont conçus et étudiés de telle sorte qu'un ordre de succession puisse être déterminé en fonction d'une puissance d'entraînement demandée par le dispositif d'entraînement, avec lequel ordre de succession un refroidissement des composants individuels doit avoir lieu, et **en ce que** l'agent de refroidissement est amené aux composants individuels en fonction de l'ordre de succession.

7. Dispositif d'entraînement selon l'une des revendications 1 à 6,
**caractérisé en ce que** l'agent de refroidissement dans le réservoir (105) est de l'azote liquide.

8. Dispositif d'entraînement selon l'une des revendications 1 à 7,
**caractérisé en ce qu'**il y a deux moteurs électriques (103), lesquels entraînement respectivement une hélice (104) dont les axes d'hélice sont logées de manière concentrique.

9. Dispositif d'entraînement selon l'une des revendications 1 à 8,
**caractérisé en ce que** la batterie au lithium-air (101) est disposée dans un boîtier qui présente des dimensions extérieures d'un conteneur standard de fret aérien, en particulier LD3, LD6.

10. Avion avec un dispositif d'entraînement selon l'une des revendications 1 à 9.
